# EUROPEAN PATENT APPLICATION

(11) **EP 2 889 204 A1**
(43) Date of publication of application: **01.07.2015**
(21) Application number: 13833873.6
(22) Date of filing: 26.08.2013
(51) Int. Cl.: B62D 25/06

(54) **ROOF STRUCTURE FOR VEHICLE**

(30) Priority: 27.08.2012 JP 2012186303
(71) Applicant: Toray Industries, Inc., Tokyo, 103-8666 (JP)
(72) Inventor: HASHIMOTO Kosaku, Nagoya-shi Aichi 455-8502 (JP); KIMOTO Yukitane, Nagoya-shi Aichi 455-8502 (JP); KURODA Yoshito, Nagoya-shi Aichi 455-8502 (JP); WAKABAYASHI Hiroki, Nagoya-shi Aichi 455-8502 (JP)
(74) Representative: Hoefer & Partner
(86) International application number: PCT/JP2013/072672
(87) International publication number: WO 2014/034586

(57) **Abstract**

A roof structure for a vehicle having one or more beam sections extending in the widthwise direction of the vehicle, characterized in that reinforcement members which extend obliquely relative to the widthwise direction of the vehicle either connect the beam sections together, or connect the beam sections and a vehicle body frame section together, the vehicle body frame section being located in front of or in rear of the beam sections, and the reinforcement members are configured from members each exhibiting a strength against the pulling of a member in the extension direction of the member. The addition of the specified reinforcement members can efficiently increase the strength and rigidity in a required direction without significantly impairing the lightweight property of the roof structure.

## Description

### Technical Field of the Invention

The present invention relates to a roof structure for a vehicle having a beam structure, and specifically, to a roof structure for a vehicle realizing a lightweight, high-strength and high-rigidity structure by addition of reinforcement members.

### Background Art of the Invention

A roof for a vehicle is frequently formed by a joint structure of a beam structure and a panel member, and a structure is proposed wherein at the time of being input to the vehicle with a load due to a front surface collision or a side surface collision, a deformation of the roof is suppressed or an impact is absorbed, for example, by beam sections extending in the widthwise direction of the vehicle (for example, Patent document 1). However, in order to suppress the shear deformation (shear in plane or torsion) of the entire roof structure, it is required to take countermeasures such as increase of the number of beams or partial reinforcement of a beam joint corner, but if done so, there is a fear causing a problem such as reduction of vehicle handling stability accompanying with increase of the weight in addition to increase of the number of parts at the upper portion of the vehicle and increase of the assembly steps.

On the other hand, as a material capable of enhancing mechanical properties (strength and rigidity) while securing a lightweight property, an FRP (Fiber Reinforced Plastic), in particular, a CFRP (Carbon Fiber Reinforced Plastic), is known. Therefore, although it is considered to efficiently enhance the strength and rigidity of a vehicle roof structure, for example, against input of a front surface collision load or a side surface collision load without accompanying significant increase of weight by using reinforcement members composed of such a lightweight material, there have been no proposals realizing such an improved structure in consideration of up to suppression of shear deformation of the entire roof structure (shear in plane or torsion).

### Prior art documents

### Patent documents

Patent document 1: JP-A-2006-298021

### Summary of the Invention

### Problems to be solved by the Invention

Accordingly, an object of the present invention is to provide a roof structure for a vehicle which can efficiently realize desirable mechanical properties such as strength and rigidity in a direction required for the roof structure without impairing the lightweight property of the entire roof structure by adding specified reinforcement members.

### Means for solving the Problems

To achieve the above-described object, a roof structure for a vehicle according to the present invention has one or more beam sections extending in a widthwise direction of the vehicle, and is characterized in that reinforcement members which extend obliquely relative to the widthwise direction of the vehicle either connect the beam sections together, or connect the beam sections and a vehicle body frame section together, the vehicle body frame section being located in front of or in rear of the beam sections, and the reinforcement members are configured from members each exhibiting a strength against pulling of a member in an extension direction of the member.

In such a roof structure for a vehicle according to the present invention, since the reinforcement members extending obliquely relative to the widthwise direction of the vehicle are connected to one or more beam sections extending in a widthwise direction of the vehicle and these reinforcement members are configured from members each exhibiting a strength against pulling of a member in an extension direction of the member, it becomes possible to receive the compression load applied to the beam section with the tensile force of the reinforcement member, and it becomes possible to transmit it to, for example, the vehicle body frame section. Therefore, as compared with a case provided with only beam sections, merely by adding the specified reinforcement members, the strength and rigidity of the roof structure can be efficiently enhanced without significantly increasing the weight of the roof structure, and in addition, since these reinforcement members extend obliquely relative to the widthwise direction of the vehicle, they can exhibit forces for suppressing the shear deformation of the entire roof structure (shear in plane or torsion), and therefore, it becomes possible that the roof structure exhibits forces for suppressing deformation against external loads input from substantially all directions. In other words, in the roof structure according to the present invention, the strength and rigidity can be efficiently increased relative to substantially any direction without significantly increasing the weight.

In the above-described roof structure for a vehicle according to the present invention, it is preferred that each of the above-described reinforcement members comprises a member having reinforcing fibers. As the material of the member having reinforcing fibers, in addition to a fiber reinforced resin, a fiber reinforced metal, etc. can be used. By being reinforced by reinforcing fibers, it becomes possible to enhance the strength and rigidity of the reinforcement member itself while securing lightweight property with material or shape, and it becomes possible to efficiently increase the strength and rigidity of the roof structure without significantly increasing the weight.

Further, in case where the reinforcement member comprises a member having reinforcing fibers, it is preferred that at least a part of the reinforcing fibers are oriented in an extension direction of the reinforcement member. Since the reinforcement member is configured as a member exhibiting a strength relative to the pulling in the extension direction of the member, if the reinforcing fibers are oriented in the extension direction, it becomes possible to exhibit a high tensile strength.

Further, the above-described reinforcement members can be provided at a formation being extended linearly in a direction toward the vehicle body frame section or the beam section, and in case where a roof panel is provided at an upper portion of the above-described roof structure, the reinforcement members can be provided also at a formation being extended in a direction along a lower surface of the roof panel, for example, at a curved shape. In case of the former formation, only the roof structure including the beam sections and the reinforcement members can be adequately reinforced substantially independently from the roof panel, and in case of the latter formation, it becomes possible to give a function for supporting the roof panel or a function for reinforcing the roof panel itself to the reinforcement members. Further, in case of the latter formation, it is also possible to provide the reinforcement members integrally with the roof panel and connect the reinforcement members of the roof panel to the vehicle body frame section or the beam sections. The selection of these formations can be carried out in accordance with a formation of the structure to be reinforced, a space required to the vehicle interior (namely, how much installation space can be allowed for the roof structure), etc.

Furthermore, in case where the above-described reinforcement members comprise members having reinforcing fibers, as the kind of the reinforcing fibers, although arbitrary reinforcing fibers such as carbon fibers, glass fibers and aramide fibers or a combination of these fibers can be used, in particular, in case where it is required to enhance strength, rigidity and the like, it is preferred that carbon fibers are included as the reinforcing fibers.

### Effect according to the Invention

Thus, in the roof structure for a vehicle according to the present invention, while ensuring the light weight property without greatly increasing the weight of the upper portion of the vehicle which affects the vehicle handling stability, the strength and rigidity of the entire roof structure can be enhanced substantially in all directions, and it becomes possible to improve the safety performance against collision.

### Brief explanation of the drawings

[Fig. 1] Fig. 1 is a partially exploded perspective view of a vehicle body having a roof structure for a vehicle according to an embodiment of the present invention.
[Fig. 2] Fig. 2 is a partial sectional view of the vehicle body depicted in Fig. 1 as viewed along line A-A of Fig. 1.
[Fig. 3] Fig. 3 is a partially exploded perspective view of a vehicle body having a roof structure for a vehicle according to another embodiment of the present invention.
[Fig. 4] Fig. 4 is a partial sectional view of the vehicle body depicted in Fig. 3 as viewed along line B-B of Fig. 3.

### Embodiments for carrying out the Invention

Hereinafter, embodiments of the present invention will be explained referring to figures.

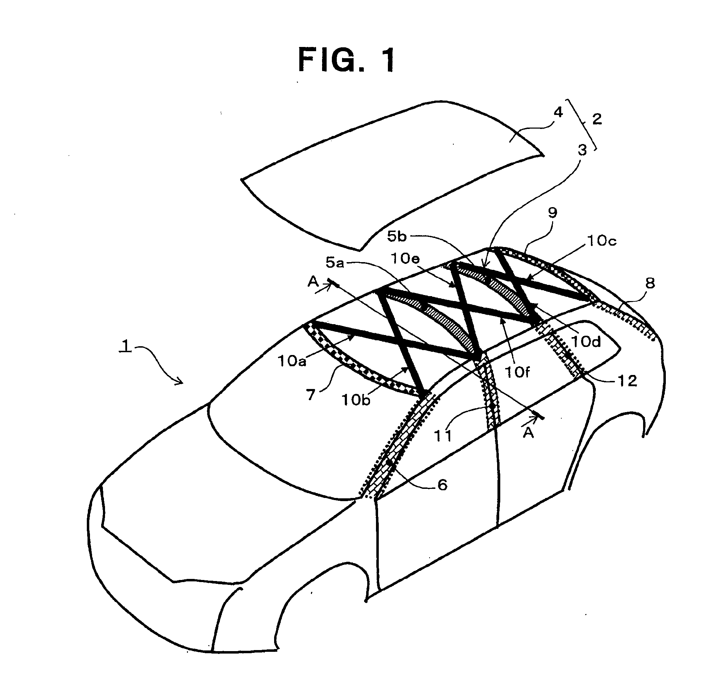

Fig. 1 shows a vehicle body having a roof structure for a vehicle according to an embodiment of the present invention. A roof 2 is provided at the upper portion of a vehicle body 1, and in this embodiment, the roof 2 is formed from a roof structure 3 and a roof panel 4. Roof structure 3 has a plurality of (in this embodiment, two) beam sections 5a, 5b extending in the widthwise direction of the vehicle. In this roof structure 3, the vehicle body frame sections in front of and in rear of beam sections 5a, 5b (in the example shown in the figure, a front frame 7 connected to a front pillar 6, and a rear frame 9 connected to a pillar 8 at a rearmost position which is a so-called D pillar) and the beam sections 5a, 5b are connected to each other by reinforcement members 10a, 10b and reinforcement members 10c, 10d extending obliquely relative to the widthwise direction of the vehicle. Further, beam sections 5a, 5b are connected to each other by reinforcement members 10e, 10f extending obliquely relative to the widthwise direction of the vehicle. Reinforcement members 10a, 10b, reinforcement members 10c, 10d and reinforcement members 10e, 10f are disposed, respectively, so as to be crossed to each other. Beam section 5a is connected to a center pillar 11, and beam section 5b is connected to a rear pillar 12.

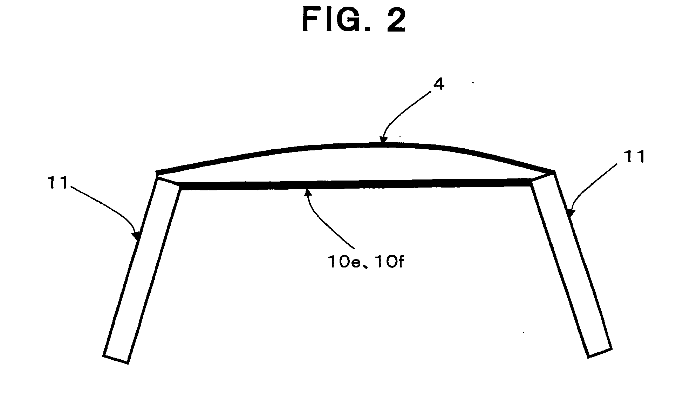

Each of the above-described reinforcement members 10a, 10b, 10c, 10d, 10e, 10f is configured from a member exhibiting a strength against pulling of the member in the extension direction of the member, and in this embodiment, a part thereof is configured from a member having reinforcing fibers oriented in the extension direction of the member, and in particular, the member is formed from a carbon fiber reinforced resin containing carbon fibers as the reinforcing fibers. These reinforcement members 10a, 10b, 10c, 10d, 10e, 10f are provided at a formation extended linearly in the direction toward the vehicle body frame section or the beam section, and for example, as shown in Fig. 2 with the front side connecting portion of reinforcement members 10e, 10f, the reinforcement members 10e, 10f extended linearly at a condition distanced from roof panel 4 formed in a curved shape are connected to center pillar 11 as the vehicle body frame section, or beam section 5a, or both of these.

In the roof structure for a vehicle 3 thus constructed, since a plurality of reinforcement members 10a, 10b, 10c, 10d, 10e, 10f extending obliquely relative to the widthwise direction of the vehicle are connected to the vehicle body frame sections or beam sections 5a, 5b and each of these reinforcement members is configured from a member exhibiting a strength against pulling of the member in the extension direction of the member, as compared with a case configured only by beam sections, it becomes possible to receive the compression load applied to the beam sections 5a, 5b with the tensile forces of the respective reinforcement members. By addition of such specified reinforcement members, the strength and rigidity of roof structure 3 can be enhanced, thereby suppressing the deformation of the entire roof structure. Moreover, by the structure where the respective reinforcement members extend obliquely relative to the widthwise direction of the vehicle, they can also exhibit forces for suppressing the shear deformation of the entire roof structure (shear in plane or torsion), and therefore, it becomes possible that the roof structure exhibits high strength and rigidity against external loads input in substantially all directions including a front collision direction and side collision direction, thereby exhibiting an excellent deformation suppressing performance.

Further, since the respective reinforcement members 10a, 10b, 10c, 10d, 10e, 10f are formed from a fiber reinforced resin, in particular, from a carbon fiber reinforced resin, they can exhibit a remarkably high tensile strength even if they are relatively thin members, and while ensuring the light weight property without greatly increasing the weight of roof structure 3 even if the reinforcement members are added, therefore, while ensuring the light weight property without greatly increasing the weight of the upper portion of the vehicle affecting the vehicle handling stability, the strength and rigidity of the entire roof structure 3 can be enhanced substantially in all directions, and it becomes possible to improve the safety performance against collision.

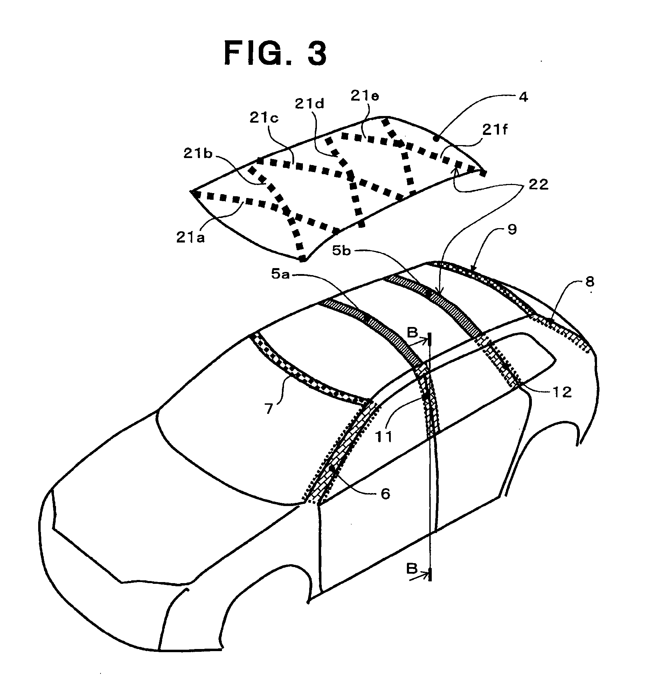

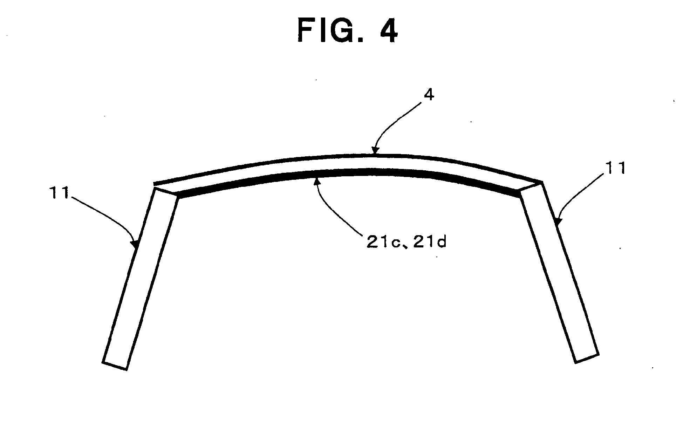

Fig. 3 shows a vehicle body having a roof structure for a vehicle according to another embodiment of the present invention. In this embodiment, along the curved inner surface of roof panel 4 at the ceiling side of the vehicle interior, respective reinforcement members 21a, 21b, 21c, 21d, 21e, 21f formed in a similar curved shape are disposed at positions similar to those shown in Fig. 1, and in this embodiment, these reinforcement members are disposed integrally with the roof panel 4 in advance. In such a roof structure for a vehicle 22 thus constructed, since the respective reinforcement members 21a, 21b, 21c, 21d, 21e, 21f are formed so as to be curved along the inner surface of roof panel 4 as compared with the respective reinforcement members shown in Fig. 1 which extend linearly (for example, as shown in Fig. 4 with respect to the portion disposed with reinforcement members 21c, 21d, since the respective reinforcement members are formed so as to be curved along the inner surface of the roof panel 4), it becomes possible to ensure the height at the ceiling side in the vehicle interior higher. Further, if these reinforcement members are formed integrally with roof panel 4 in advance, it also becomes possible to facilitate the assembly of the entire roof. Because the other structures, operations and effects are similar to those in the embodiment shown in Fig. 1, the explanation will be omitted by providing the same symbols as those given in Fig. 1.

### Industrial Applicability

The roof structure for a vehicle according to the present invention can be applied to various vehicles having a roof.

### Explanation of symbols

1: vehicle body
2: roof
3, 22: roof structure
4: roof panel
5a, 5b: beam secton
6: front pillar
7: front frame
8: pillar at rearmost position
9: rear frame
10a, 10b, 10c, 10d, 10e, 10f, 21a, 21b, 21c, 21d, 21e, 21f: reinforcement member
11: center pillar
12: rear pillar

## Claims

1. A roof structure for a vehicle having one or more beam sections extending in a widthwise direction of the vehicle, **characterized in that** reinforcement members which extend obliquely relative to the widthwise direction of the vehicle either connect said beam sections together, or connect said beam sections and a vehicle body frame section together, said vehicle body frame section being located in front of or in rear of said beam sections, and said reinforcement members are configured from members each exhibiting a strength against pulling of a member in an extension direction of the member.

2. The roof structure for a vehicle according to claim 1, wherein each of said reinforcement members comprises a member having reinforcing fibers.

3. The roof structure for a vehicle according to claim 1 or 2, wherein each of said reinforcement members comprises a member having reinforcing fibers and at least a part of said reinforcing fibers are oriented in an extension direction of the reinforcement member.

4. The roof structure for a vehicle according to any of claims 1 to 3, wherein each of said reinforcement members comprises a fiber reinforced resin member.

5. The roof structure for a vehicle according to any of claims 1 to 4, wherein each of said reinforcement members is extended linearly in a direction toward said vehicle body frame section or said beam section.

6. The roof structure for a vehicle according to any of claims 1 to 4, wherein a roof panel is provided at an upper portion of said roof structure, and said reinforcement members are extended in a direction along a lower surface of said roof panel.

7. The roof structure for a vehicle according to any of claims 2 to 6, wherein said reinforcing fibers of said reinforcement members include carbon fibers.
